# EUROPÄISCHE PATENTSCHRIFT

(11) **EP 2 569 194 B1**
(45) Veröffentlichungstag und Bekanntmachung des Hinweises auf die Patenterteilung: **19.12.2018**
(21) Anmeldenummer: 11743183.3
(22) Anmeldetag: 06.05.2011
(51) Int. Cl.: B60W 30/08, B60W 30/12

(54) **VERFAHREN ZUR BESTIMMUNG EINES FAHRSCHLAUCHS**
METHOD FOR DETERMINING A DRIVING TUBE
PROCÉDÉ DE DÉTERMINATION D'UNE TRAJECTOIRE PRÉVISIONNELLE

(30) Priorität: 11.05.2010 EP 10401067
(43) Veröffentlichungstag der Anmeldung: 20.03.2013
(73) Patentinhaber: Conti Temic Microelectronic GmbH, 90411 Nürnberg (DE); Continental Teves AG & Co. OHG, 60488 Frankfurt am Main (DE)
(72) Erfinder: LÜKE, Stefan, 61191 Rosbach vor der Höhe (DE); WALDBAUER, Dirk, 65817 Eppstein (DE); DARMS, Michael, 88131 Lindau (DE); BERTHOLD, Thomas, 64293 Darmstadt (DE); KOMAR, Matthias, 60433 Frankfurt (DE)
(86) Internationale Anmeldenummer: PCT/DE2011/001039
(87) Internationale Veröffentlichungsnummer: WO 2011/141018

(56) Entgegenhaltungen:
- EP-A2- 1 552 975
- DE-A1- 19 738 764
- DE-A1-102005 002 719
- US-A1- 2003 072 471

## Beschreibung

Die Erfindung betrifft ein Fahrerassistenzsystem zur Bestimmung eines Fahrschlauchs für ein Straßenfahrzeug in einer komplexen Verkehrssituation. Fahrerassistenzsysteme zur Spurhaltung bzw. Spurverlassenswarnung sind derzeit kommerziell erhältlich. Mit einem Sensorsystem wird die Umgebung vor dem Fahrzeug erfasst und Fahrspurmarkierungen identifiziert. Die erkannten Fahrspurmarkierungen (i.d.R. Striche oder Linien auf der Fahrbahn) begrenzen die zukünftige Fahrspur. In einer komplexen Verkehrssituation insbesondere in einem Baustellenbereich mit einer Vielzahl von Fahrspurmarkierungen kann ein herkömmliches Fahrerassistenzsystem den Fahrschlauch nicht mehr zuverlässig bestimmen.

In der DE102005002719A1 wird ein Verfahren zur Kursprädiktion in Fahrerassistenzsystemen für Kraftfahrzeuge offenbart. Bei diesem Verfahren wird anhand von Informationen aus unterschiedlichen Informationsquellen eine Kurshypothese erstellt.

Es ist deshalb die Aufgabe der hier vorliegenden Erfindung ein verbessertes Verfahren und eine verbesserte Vorrichtung zur Bestimmung eines Fahrschlauchs für ein Straßenfahrzeug in einer komplexen Verkehrssituation anzugeben.

Die Ausgabe wird mit den Merkmalen der unabhängigen Ansprüche 1 und 10 gelöst.

Das hier vorgestellt Verfahren zur Bestimmung eines Fahrschlauchs, wobei ein Umfelderfassungssensor einer Fahrbahn vor dem Fahrzeug erfasst unterscheidet sich gegenüber herkömmlichen Systemen dadurch, dass die Bestimmung in Abhängigkeit erkannter Fahrspurmarkierungen und erhabener Fahrbahnbegrenzungen erfolgt. Erhabene Fahrbahnbegrenzungen sind z.B. Leitplanken, Baken, seitlich fahrende Fahrzeuge und Baustellenwände und werden im weiteren Verlauf mit Fahrbahnbegrenzung bezeichnet. Eine komplexe Verkehrssituation liegt insbesondere dann vor, wenn mehr als eine Fahrspurmarkierung bzw. -begrenzung erkannt wird.

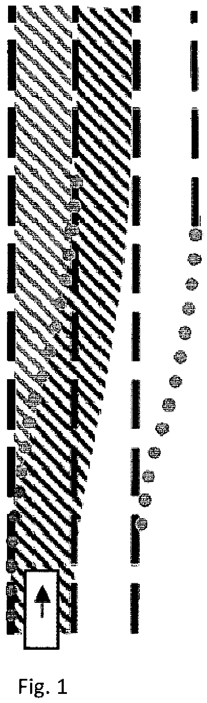

In einer besonderen Ausgestaltung der Erfindung wird zur Bestimmung des wahrscheinlichsten Fahrschlauchs eine Fahrbahnbegrenzung stärker als eine Fahrspurmarkierung gewichtet. D.h. dass der Fahrschlauch aufgrund von Wahrscheinlichkeitserwägungen bestimmt wird, und eine Fahrspurmarkierung mit einer größeren Wahrscheinlichkeit überfahren werden darf als eine Fahrbahnbegrenzung. In Fig. 1 ist eine Verkehrssituation mit Fahrspurmarkierungen (Striche) und Baken (Punkte) zur Begrenzung dargestellt. Das Egofahrzeug ist als Rechteck mit einem Pfeil, der in Fahrtrichtung deutet, gekennzeichnet. Der wahrscheinlichste Fahrschlauch (dunkel schraffierter Bereich) führt entlang der Baken, die diese Begrenzung stärker als Fahrspurmarkierungen gewichtet.

In einer positiven Ausgestaltung der Erfindung wird zur Bestimmung des wahrscheinlichsten Fahrschlauchs eine erkannte Fahrspurmarkierung und Fahrbahnbegrenzung in Abhängigkeit von ihrer Art gewichtet. Z.B. ist ein Kriterium für die Wichtung eine Eigenschaft der Fahrbahnmarkierung bzw. -begrenzung. Die Eigenschaft kann z.B. anhand der Überfahrbarkeit definiert werden. Ein Beispiel für eine dreistufige Wichtung ist "Überfahren nicht empfohlen" (geringe Wichtung), "Überfahren verboten" (mittlere Wichtung), "Überfahren nicht möglich" (hohe Wichtung). Eine Wichtung kann natürlich beliebig viele Stufen umfassen.

In einer bevorzugten Ausgestaltung der Erfindung wird die Fahrbahnbreite eines möglichen Fahrschlauchs in Abhängigkeit von einer oder mehreren typischen Fahrbahneigenschaften bewertet wird. Im Folgenden werden Beispiele für typische Fahrbahneigenschaften aufgezählt:
von ihrer Art gewichtet. Z.B. ist ein Kriterium für die Wichtung eine Eigenschaft der Fahrbahnmarkierung bzw. -begrenzung. Die Eigenschaft kann z.B. anhand der Überfahrbarkeit definiert werden. Ein Beispiel für eine dreistufige Wichtung ist "Überfahren nicht empfohlen" (geringe Wichtung), "Überfahren verboten" (mittlere Wichtung), "Überfahren nicht möglich" (hohe Wichtung). Eine Wichtung kann natürlich beliebig viele Stufen umfassen.

In einer bevorzugten Ausgestaltung der Erfindung wird die Fahrbahnbreite eines möglichen Fahrschlauchs in Abhängigkeit von einer oder mehreren typischen Fahrbahneigenschaften bewertet wird. Im Folgenden werden Beispiele für typische Fahrbahneigenschaften aufgezählt:
a) Eine typische Fahrbahn ist rechts und links durch Fahrspurmarkierungen und/oder - begrenzungen begrenzt.
b) Die typische Breite einer Fahrbahn beträgt 2,0m bis 3,75m. In einer besonderen Ausgestaltung kann die wahrscheinlichste Fahrbahnbreite anhand des Straßentyps (Autobahn, Landstraße, etc.) oder einer Umgebungsinformation (z.B. Baustellenbereich) bestimmt werden. Straßentyp und Umgebungsinformation werden z.B. durch ein GPS System oder basierend auf Daten des Umfelderfassungssenors zur Verfügung gestellt.
c) Typischerweise ist die Breite der Fahrbahn nahezu konstant.
d) Die Fahrbahn beginnt direkt vor dem Fahrzeug und ihr weiterer Verlauf kann im Erfassungsbereich des Sensors verfolgt werden.

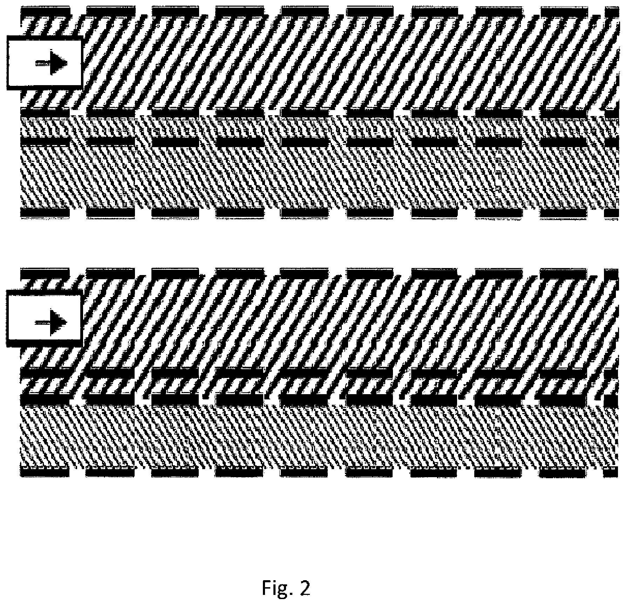

In einer bevorzugten Ausgestaltung der Erfindung wird die Ähnlichkeit eines möglichen Fahrschlauchs in Abhängigkeit von benachbarten möglichen Fahrschläuchen bewertet. Ein Kriterium ist z.B. die Breite der Fahrspuren. Üblicherweise ist die Breite benachbarter Fahrspuren annähernd gleich. In Baustellensituationen z.B. auf der Autobahn kann die linke Fahrspur etwas schmaler sein. Eine solche Verkehrssituation soll beispielhaft anhand von Fig. 2 erläutert werden. Es sind vier Fahrspurmarkierungen sichtbar, die zwei benachbarte Fahrschläuche begrenzen. Das Egofahrzeug ist als Rechteck mit einem Pfeil, der in Fahrtrichtung deutet, gekennzeichnet. In der oberen Abbildung wird die zweite Fahrspurmarkierung von oben als Trennline zwischen den benachbarten Fahrschläuchen ausgewählt, so dass zwei Fahrschläuche gleicher Breite entstehen. Die Fahrschläuche sind durch eine unterschiedliche Schraffur kenntlich gemacht. In der unteren Abbildung wird die dritte Fahrspurmarkierung von oben als Trennline zwischen den benachbarten Fahrschläuchen ausgewählt. Das Ergebnis sind Fahrschläuche mit einer unterschiedlichen Breite. In diesem Ausführungsbeispiel werden Fahrschläuche gleicher Breite bevorzugt, außer eine weitere Umfeldinformation (Baustellenbereich, Verkehrszeichen zur Spurverengung etc.) indiziert ein anderes Vorgehen, was z.B. zu einem Fahrschlauch wie in der unteren Abbildung von Fig. 2 beschrieben führt.

In einer besonderen Ausgestaltung der Erfindung wird ein möglicher Fahrschlauch in Abhängigkeit davon bewertet, ob sich Fahrbahnbegrenzungen kreuzen. Üblicherweise ist eine Kreuzung von Fahrbahnmarkierungen nur in einem Übergangsbereich (z.B. Einfahrt oder Ausfahrt in/aus einen/einem Baustellenbereich) zu erwarten und nicht mehr im weiteren Verlauf des Fahrschlauchs. Ein Fahrschlauch der außerhalb eines Übergangsbereichs keine Kreuzung von Fahrbahnmarkierungen und/oder Fahrbahnbegrenzungen aufweist wird deshalb bevorzugt vor einem Fahrschlauch mit einer Kreuzung von Fahrbahnmarkierungen und/oder Fahrbahnbegrenzungen ausgewählt bzw. entsprechend gewichtet.

In einer bevorzugten Ausgestaltung der Erfindung wird ein möglicher Fahrschlauch in Abhängigkeit von den auszuführenden Fahrmanövern bewertet, die nötig sind um diesem Fahrschlauch zu folgen. Wenn ein moderates Fahrmanöver zum Befahren des Fahrschlauchs ausreicht, so wird dieser Fahrschlauch als wahrscheinlicher angesehen als ein ebenso möglicher Fahrschlauch, der eine starke Änderung von Geschwindigkeit und Richtung des Eigenfahrzeugs erfordert. Ein moderates Fahrmanöver liegt z.B. vor, wenn die Änderung von Geschwindigkeit und/oder Richtung kleiner als ein vorgegebener Schwellwert ist.

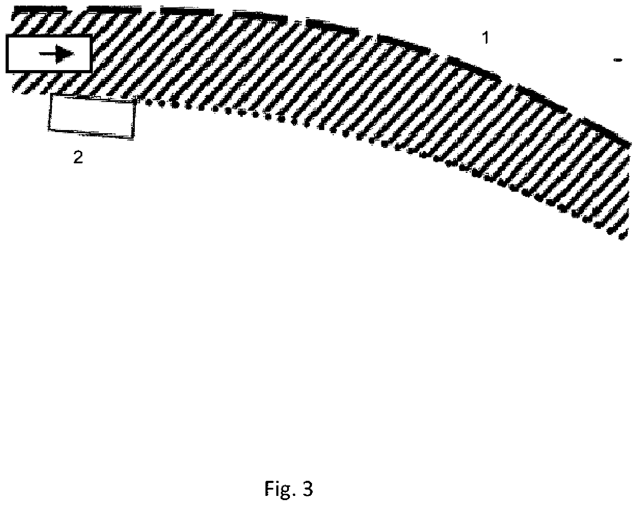

Eine Vorrichtung zur Bestimmung eines Fahrschlauchs für ein Straßenfahrzeug, umfasst einen Umgebungserfassungssensor. Der Sensor kann als Kamera, Lidar- und Radarsensor ausgebildet sein. Der Sensor kann für weitere Funktionen wie Objekterkennung, Abstandstempomat, Verkehrszeichenerkennung oder Straßentyperkennung ausgelegt sein. Weiterhin ist eine Auswerteeinheit vorgesehen, in der ein zuvor beschriebenes Verfahren hinterlegt ist. Zudem ist eine Anzeigevorrichtung zur Ausgabe des Fahrschlauchs an den Fahrer und/oder eine Vorrichtung zur Durchführung eines automatischen Lenk- oder Bremseingriffs vorgesehen Ein automatischer Eingriff ist z.B. derart ausgestaltet, dass zumindest eine der folgenden Regeln befolgt wird
- das Fahrzeug wird bei einem geradlinig verlaufenden Fahrschlauch in der Mitte desselben gehalten, insbesondere wenn die beiden Begrenzungen der Fahrschlauchs von derselben Art sind.
- vorgegebene Arten von Fahrbahnbegrenzungen werden vorrangig auf Abstand gehalten. In Fig. 3 ist eine Situation dargestellt, in der der linke Rand des Fahrschlauchs (schraffierter Bereich) von einer Fahrspurmarkierung (1) und der rechte Rand von einem anderen Fahrzeug, dem Fremdfahrzeug (2), begrenzt werden. Das Egofahrzeug ist als Rechteck mit einem Pfeil, der in Fahrtrichtung deutet, gekennzeichnet. Der Abstand zum anderen Fahrzeug wird höher gewählt als zur Fahrbahnmarkierung. Andere Ausführungsbeispiele sind, dass ein Abstand zu einem anderen Fahrzeug größer als der zu einer anderen erhabenen Fahrbahnbegrenzung ist. Weiterhin kann vorgesehen sein, dass ein Abstand zu einer erhabenen Fahrbahnbegrenzung größer als der zu einer Fahrspurmarkierung ist.
- Fahrökonomische Regelung: Lenk- und (negative) Beschleunigungseingriffe werden auf ein Minimum reduziert.

## Patentansprüche

1. Verfahren zur Unterstützung eines Fahrzeuglenkers, wobei zur Bestimmung eines Fahrschlauchs für ein Straßenfahrzeug in einer komplexen Verkehrssituation ein Umfelderfassungssensor eine Fahrbahn vor dem Fahrzeug erfasst, wobei die Bestimmung in Abhängigkeit erkannter Fahrspurmarkierungen und erhabener Fahrbahnbegrenzungen erfolgt,
**dadurch gekennzeichnet, dass**
bei verschiedenartigen Fahrspurmarkierungen oder -begrenzungen links und rechts des Fahrschlauchs das Fahrzeug einen größeren Abstand zu einer der Seiten in Abhängigkeit von der Begrenzungsart einhält.

2. Verfahren nach Anspruch 1,
**dadurch gekennzeichnet, dass**
zur Bestimmung des Fahrschlauchs eine Gewichtung in Abhängigkeit von der Art der Fahrspurmarkierung oder -begrenzung vorgenommen wird.

3. Verfahren nach einem der vorherigen Ansprüche,
**dadurch gekennzeichnet, dass**
zur Bestimmung des Fahrschlauchs eine Fahrbahnbegrenzung stärker als eine Fahrspurmarkierung gewichtet wird.

4. Verfahren nach einem der vorherigen Ansprüche,
**dadurch gekennzeichnet, dass**
zur Bestimmung des Fahrschlauchs die Fahrbahnbreite eines möglichen Fahrschlauchs in Abhängigkeit von einer oder mehreren typischen Fahrbahneigenschaften bewertet wird.

5. Verfahren nach einem der vorherigen Ansprüche,
**dadurch gekennzeichnet, dass**
zur Bestimmung des Fahrschlauchs die Ähnlichkeit eines möglichen Fahrschlauchs in Abhängigkeit von benachbarter möglicher Fahrschläuche bewertet wird.

6. Verfahren nach einem der vorherigen Ansprüche,
**dadurch gekennzeichnet, dass**
ein möglicher Fahrschlauch in Abhängigkeit von einer Eigenschaft bewertet wird, ob sich Fahrbahnbegrenzungen kreuzen.

7. Verfahren nach einem der vorherigen Ansprüche,
**dadurch gekennzeichnet, dass**
ein möglicher Fahrschlauch in Abhängigkeit von den auszuführenden Fahrmanövern bewertet wird, die nötig sind um diesem Fahrschlauch zu folgen.

8. Verfahren nach einem der vorherigen Ansprüche,
**dadurch gekennzeichnet, dass**
bei gleichartigen Fahrspurmarkierungen oder -begrenzungen links und rechts des Fahrschlauchs das Fahrzeug insbesondere bei einem geradlinigen Verlauf in der Mitte des Fahrschlauchs gehalten wird.

9. Vorrichtung zur Bestimmung eines Fahrschlauchs für ein Straßenfahrzeug, umfassend
- einen Umgebungserfassungssensor
- eine Auswerteeinheit in der ein Verfahren nach einem der vorherigen Ansprüche hinterlegt ist
- eine Anzeigevorrichtung zur Ausgabe des Fahrschlauchs an den Fahrer und/oder eine Vorrichtung zur Durchführung eines automatischen Lenk- oder Bremseingriffs.

10. Fahrzeug mit einer Vorrichtung nach Anspruch 9.

## Claims

1. A method for assisting a driver of a vehicle, wherein, in order to determine a driving tube for a road vehicle in a complex traffic situation, a surroundings detection sensor detects a carriageway in front of the vehicle, wherein
the determination is carried out as a function of detected lane markings and raised carriageway delimiting means,
**characterised in that**
if the lane markings or delimiting means to the left and right of the driving tube are different, the vehicle observes a greater distance from one of the sides as a function of the type of delimiting means.

2. The method according to Claim 1,
**characterised in that**
in order to determine the driving tube, a weighting is carried out as a function of the type of lane marking or delimiting means.

3. The method according to any one of the preceding claims,
**characterised in that**
in order to determine the driving tube, a carriageway delimiting means is given a greater weighting than a lane marking.

4. The method according to any one of the preceding claims,
**characterised in that**
in order to determine the driving tube, the carriageway width of a possible driving tube is evaluated as a function of one or more typical carriageway properties.

5. The method according to any one of the preceding claims,
**characterised in that**
in order to determine the driving tube, the similarity of a possible driving tube is evaluated as a function of neighbouring possible driving tubes.

6. The method according to any one of the preceding claims,
**characterised in that**
a possible driving tube is evaluated as a function of a characteristic of whether carriageway delimiting means intersect.

7. The method according to any one of the preceding claims,
**characterised in that**
a possible driving tube is evaluated as a function of the driving manoeuvres to be carried out and which are necessary to follow this driving tube.

8. The method according to any one of the preceding claims,
**characterised in that**
if lane markings or delimiting means to the left and right of the driving tube are similar, the vehicle is held in the middle of the driving tube, in particular in the case of a straight-line course.

9. A device for determining a driving tube for a road vehicle, comprising:
- a surroundings detection sensor,
- an evaluation unit, in which a method according to any one of the preceding claims is stored,
- a display device for outputting the driving tube to the driver and/or a device for performing an automatic steering or braking intervention.

10. A vehicle having a device according to Claim 9.

## Revendications

1. Procédé pour l'assistance d'un conducteur de véhicule, un capteur de détection d'environnement détectant une chaussée devant le véhicule pour la détermination d'une trajectoire pour un véhicule routier dans une situation de trafic complexe, la détermination étant effectuée en fonction de marquages de voies et de délimitations de chaussée surélevées détectées,
**caractérisé en ce que**
le véhicule maintient une plus grande distance relativement à un des côtés en fonction du type de délimitation, en cas de marquages ou de délimitations de voie différentes, à gauche et à droite de la trajectoire de conduite.

2. Procédé selon la revendication 1,
**caractérisé en ce qu'**
une pondération est effectuée en fonction du type de marquage ou de délimitation de la voie pour la détermination de la trajectoire.

3. Procédé selon l'une quelconque des revendications précédentes,
**caractérisé en ce qu'**
une délimitation de chaussée est pondérée plus fortement qu'un marquage de voie pour la détermination de la trajectoire.

4. Procédé selon l'une quelconque des revendications précédentes,
**caractérisé en ce que**
la largeur de chaussée d'une trajectoire possible est évaluée en fonction d'une ou de plusieurs propriétés de chaussée typiques pour la détermination de la trajectoire.

5. Procédé selon l'une quelconque des revendications précédentes,
**caractérisé en ce que**
la similitude d'une trajectoire possible est évaluée en fonction de trajectoires possibles voisines pour la détermination de la trajectoire.

6. Procédé selon l'une quelconque des revendications précédentes,
**caractérisé en ce qu'**
une trajectoire possible est évaluée en fonction d'une propriété déterminant si des délimitations de chaussée se croisent.

7. Procédé selon l'une quelconque des revendications précédentes,
**caractérisé en ce qu'**
une trajectoire possible est évaluée en fonction de la nécessité d'effectuer des manoeuvres de conduite requises pour suivre cette trajectoire.

8. Procédé selon l'une quelconque des revendications précédentes,
**caractérisé en ce que**
le véhicule est maintenu au milieu de la trajectoire, en particulier lors d'un déroulement rectiligne, en cas de marquages ou de délimitations de voie de même type à gauche et à droite de la trajectoire.

9. Dispositif pour la détermination d'une trajectoire pour un véhicule routier, comprenant
- un capteur de détection d'environnement
- une unité d'évaluation dans laquelle un procédé selon l'une quelconque des revendications précédentes est enregistrée
- un dispositif d'affichage pour la sortie de la trajectoire à l'attention du conducteur et/ou un dispositif pour l'exécution d'une intervention de direction ou de freinage automatique.

10. Véhicule avec un dispositif selon la revendication 9.
